# FASCICULE DE BREVET EUROPEEN

(11) **EP 2 222 555 B1**
(45) Date de publication et mention de la délivrance du brevet: **18.02.2015**
(21) Numéro de dépôt: 08860994.6
(22) Date de dépôt: 15.12.2008
(51) Int. Cl.: B64C 31/02, B64C 31/06, B64C 39/02, B64D 17/02

(54) **DISPOSITIF DE MAINTIEN EN ALTITUDE D'UNE CHARGE UTILE DONT LA SOURCE D'ENERGIE DE MAINTIEN EN ALTITUDE EST PERMANENTE ET EXTRAITE DU MILIEU**
VORRICHTUNG ZUR BEWAHRUNG DER HÖHE EINER NUTZLAST MIT EINER PERMANENTEN UND AUS DER UMGEBUNG EXTRAHIERTEN HÖHENERHALTENDEN ENERGIEQUELLE
DEVICE FOR MAINTAINING THE ALTITUDE OF A PAYLOAD HAVING AN ALTITUDE-MAINTENANCE ENERGY SOURCE THAT IS PERMANENT AND EXTRACTED FROM THE SURROUNDING MEDIUM

(30) Priorité: 18.12.2007 FR 0708847
(43) Date de publication de la demande: 01.09.2010
(73) Titulaire: THALES, 92200 Neuilly-sur-Seine (FR)
(72) Inventeur: SAINCT, Hervé, 06110 Le Cannet (FR); RENAULT, Hervé, 06400 Cannes (FR)
(74) Mandataire: Esselin, Sophie
(86) Numéro de dépôt international: PCT/EP2008/067555
(87) Numéro de publication internationale: WO 2009/077504

(56) Documents cités:
- WO-A-2007/107018
- US-A1- 2001 025 900

## Description

La présente invention se rapporte à un dispositif de maintien en altitude d'une charge utile dont la source d'énergie de maintien en altitude est permanente et extraite du milieu.

On connaît d'après des documents de la NASA américaine une plate-forme « HALE » («High Altitude, Long Endurance ») supportant, en tant que charge utile, des systèmes d'observation et de télécommunication. Cette plate-forme comporte essentiellement un corps léger en forme de rectangle très allongé, recouvert sur sa face supérieure d'un grand nombre de panneaux solaires alimentant des moteurs à hélices de propulsion qui le maintiennent en altitude, mais du fait que la propulsion n'est assurée que par des panneaux solaires, cette plate-forme a une autonomie limitée.

On connait d'après le document WO 2007/107018 A1 une plate-forme stratosphérique autonome pour le maintien en altitude d'une charge utile, mais cette plate-forme, du fait qu'elle met en oeuvre en tant que surfaces porteuses des parachutes ou des parapentes, ne présente pas des qualités aérodynamiques suffisantes pour un maintien géostationnaire de longue durée.

D'autre part, on connait d'après le document US 2001/0025900 A1 un dispositif de mise en altitude et de traction d'un corps planant, mais ce corps est un planeur qui ne peut être immobilisé de façon quasi géostationnaire.

La présente invention a pour objet un dispositif de maintien permanent en altitude d'une charge utile dont la source d'énergie de maintien en altitude est pratiquement permanente et extraite du milieu, dispositif qui soit peu onéreux à réaliser et à lancer et qui nécessite un entretien minimal tout en pouvant emporter une charge utile qui soit au moins du même ordre de grandeur que celle des satellites classiques. En outre, ce dispositif de l'invention peut remplacer avantageusement des dispositifs semblables de télécommunication ou de surveillance localisés au sol, par exemple une tour réémettrice.

Le dispositif conforme à l'invention est un dispositif de maintien en altitude d'une charge utile dont la source d'énergie de maintien en altitude étant permanente et extraite du milieu, ce dispositif comportant au moins deux corps planants reliés entre eux par au moins une liaison matérielle et se trouvant, en utilisation, à des altitudes différentes par rapport au sol et pour lesquelles les vents instantanés ont, pratiquement en permanence, des caractéristiques différentes, et comportant un système de contrôle des attitudes respectives de ces deux corps, caractérisé en ce que chaque corps planant est constitué d'une aile d'aéronef rigide en sustentation, la charge utile et le système de contrôle des attitudes de chaque aile étant incorporés à l'intérieur des ailes.

Selon une caractéristique de l'invention, le système de contrôle est relié à des capteurs ou sources d'information relatifs à la mesure d'au moins un des paramètres suivants : vitesse et direction des vents, attitude des ailes, pression atmosphérique, température, position des ailes par rapport au sol, prévisions météorologiques.

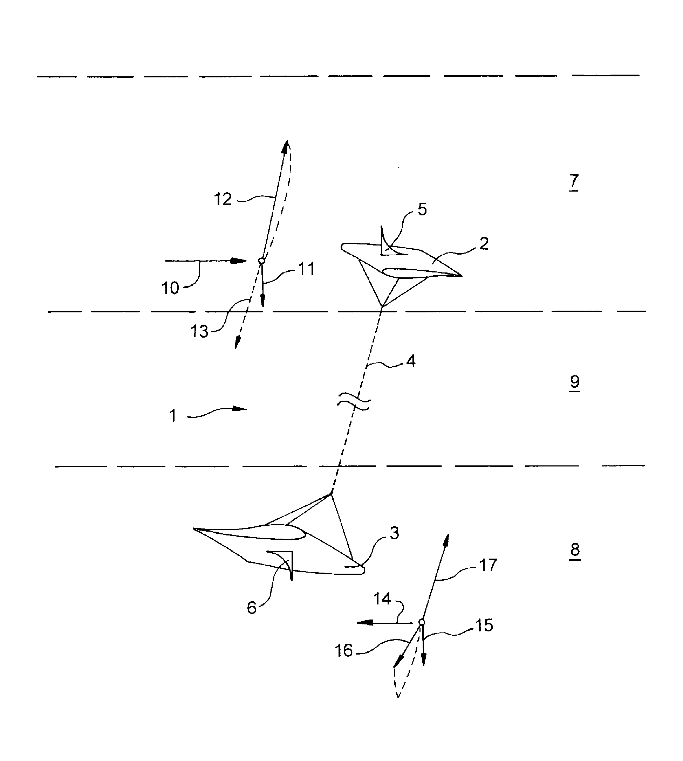

La présente invention sera mieux comprise à la lecture de la description détaillée d'un mode de réalisation, pris à titre d'exemple non limitatif et illustré par le dessin annexé, sur lequel : - la figure unique est un schéma simplifié d'un dispositif conforme à l'invention.

L'invention est décrite ci-dessous en référence à une plate-forme portant une charge utile se composant d'équipements de télécommunication, mais il est bien entendu qu'elle n'est pas limitée à cette seule application, et que la charge utile peut comporter d'autres équipements nécessitant d'être supportés en altitude, par exemple des instruments optiques d'observation terrestre et/ ou aérienne (caméras, radars, radiotélescopes,...), ou tout type de relais radio ou optique, mono ou multidirectionnel, pour des applications telles que GSM, TV, radio, Wifi, etc. ou bien des applications impliquant des instruments d'observation (surveillance, suivi de l'évolution agricole ou de situations de crise...).

La plate-forme 1 de l'invention a été schématisée sur le dessin dans l'état déployé, en altitude. Elle comporte essentiellement deux parties planant dans cet état déployé à des altitudes différentes dans des couches de vents à caractéristiques différentes et reliées entre elles. Une caractéristique essentielle de l'invention est que les deux parties de la plate-forme soient situées à des altitudes différentes, altitudes auxquelles les caractéristiques des couches de vents sont différentes, comme décrit plus en détail ci-dessous.

Dans l'exemple du dessin, chaque partie de cette plate-forme comporte un corps planant 2, 3 respectivement, ces deux corps étant reliés entre eux par une liaison matérielle 4, qui est par exemple un câble en KevlarTM, relativement léger, tout en étant suffisamment résistant pour ne pas être rompu quelles que soient les conditions environnantes et les tractions exercées sur lui par les corps planants. Ce peut être par exemple un câble tel que ceux utilisés pour les ballons météorologiques stratosphériques. Ces corps 2 et 3 sont réalisés sous forme d'ailes d'aéronefs comme représenté sur le dessin, la condition à respecter étant qu'ils présentent chacun une portance et une finesse suffisantes pour les maintenir constamment en sustentation compte tenu des conditions environnantes. Leur réalisation doit simplement respecter les lois aérodynamiques classiques bien connues en aéronautique. En outre, ces deux parties de la plate-forme ne sont pas nécessairement identiques, et il est même préférable que la partie supérieure ait une portance supérieure à celle de l'autre partie pour pouvoir supporter à la fois le poids du câble 4 et celui de la partie inférieure.

On notera que le mode de réalisation de la plate-forme de l'invention décrit ici comporte deux parties comprenant chacune un corps planant, mais il est bien entendu que chaque partie de cette plate-forme de l'invention peut comporter un plus grand nombre de tels corps. Pour chacune de ces deux parties, les différents corps la composant sont alors maintenus à des altitudes voisines.

Le fait de remplacer, à chaque extrémité du câble 4, un corps de grandes dimensions par deux ou plusieurs corps de plus petites dimensions, permet d'alléger la masse totale à chaque extrémité de ce câble à performances similaires, car plus un corps planant est grand, plus la « poutre » centrale (ou les poutres) qui le rigidifie doit être raide et lourde. En outre, la liaison 4, qui est dans l'exemple du dessin un câble unique, peut comporter plusieurs câbles, ou au moins un câble se divisant en plusieurs brins à au moins l'une de ses extrémités. Dans ce dernier cas, l'aile reliée aux brins du câble peut être allégée du fait que la multiplication des suspentes permet de répartir les efforts de traction exercés sur la structure de l'aile en plusieurs points et donc d'alléger cette structure en évitant d'avoir un ancrage du câble en un seul point de l'aile (ce qui oblige à rigidifier sa structure avec une poutre centrale lourde).

Les ailes 2 et 3 sont munies toutes deux de systèmes de contrôle d'attitude permettant à chacune d'elles d'être orientée en toutes directions en fonction des caractéristiques de vitesse et de direction de la couche de vents instantanés dans laquelle elle est en sustentation, ainsi que des mêmes données pour l'autre aile, en vue de contrôler la localisation de l'une par rapport à l'autre et par rapport au sol. Ces systèmes de contrôle comportent des dispositifs mécaniques ou électromécaniques agissant sur l'attitude des ailes. Ces dispositifs sont par exemple des gouvernes orientables 5, 6 ou tous autres dispositifs appropriés, par exemple des dispositifs de traction différentielle sur un tripode d'élingues de sustentation (qui permet de modifier tous les angles d'attitude de la plate-forme par rapport au câble sans avoir besoin de volets ou de gouvernes). Les systèmes de contrôle d'attitude comportent une partie électronique de communication et d'asservissement qui peut être répartie dans une ou les deux ailes, et une partie électromécanique incorporée dans les deux ailes pour la commande des gouvernes. La partie électronique comporte en particulier des circuits de communication avec un centre de contrôle au sol (ou avec un centre de contrôle embarqué) et entre les deux parties 2 et 3, ainsi que des capteurs des grandeurs relatives à l'environnement (vitesse et orientation des vents, barométrie, température, et éventuellement leurs évolutions prévues par la météorologie,...) ainsi que l'attitude des ailes, et des circuits exploitant ces grandeurs et assurant la commande de la partie électromécanique. La réalisation de ce système de contrôle est évidente pour l'homme du métier à la lecture de la présente description, sachant que l'on applique ici les principes de la navigation d'un voilier à des éléments d'aéronef : remonter au vent à l'aide d'une dérive, l'aile du bas (par exemple) en tenant lieu. On notera que les ailes de l'invention ont trois fonctions dont deux sont inhabituelles: une fonction "classique" de sustentation, deux fonctions "nouvelles": compensation de dérive et traction, grâce au second courant atmosphérique, ce qui est complètement inhabituel en aviation, et n'est pas détaillé davantage ici.

Le dispositif de l'invention assure la permanence du maintien en altitude de sa charge utile, en particulier dans des zones à conditions météorologiques défavorables (vents à vitesses et/ou orientations peu différentes,...), grâce à ses ailes rigides à grande finesse et à grand allongement (« aspect ratio » en anglais) sur lesquelles peuvent s'exercer de fortes tractions latérales en cas de besoin.

Le système de contrôle d'attitude commande l'orientation des gouvernes en fonction des caractéristiques de vents précitées et des prévisions de changements de ces caractéristiques et en fonction des ordres pouvant être envoyés depuis le sol en vue de déplacer la plate-forme (par exemple pour surveiller une portion différente de la surface terrestre au cas où cette plate-forme est une plate-forme d'observation, ou pour lui faire éviter des zones à fortes perturbations météorologiques ou pour éviter des zones où les caractéristiques des couches de vents 7 et 8 ne sont pas suffisamment différentes). Une possibilité est également l'autonomie complète de la plate-forme, si on la dote des capacités de prévision météorologique précédemment évoquées et d'un système de mesure de sa position (GPS, Galileo...).

En outre, l'utilisation de prévisions météorologiques permet d'anticiper le contrôle d'attitude de la plate-forme en la pré-positionnant à l'avance en fonction des localisations, vitesses, altitudes qui seront les plus favorables lorsqu'il est prévu des changements de conditions environnantes, et en particulier des changements de vitesses de vent, ceci en vue d'assurer à la plate-forme une position quasi-géostationnaire.

Par ailleurs la finesse des ailes, que l'homme du métier (par exemple le spécialiste de la construction de planeurs) sait déterminer, est généralement très bonne et optimisée pour permettre le maintien en vol dans un grand nombre de conditions atmosphériques possibles (différentes combinaisons de vents, altitudes et pressions par exemple), ce qui, en association avec les mesures d'environnement et les prévisions météorologiques permet le maintien permanent en vol. Selon un exemple de réalisation, ces ailes ont avantageusement une finesse comprise entre 15 et 20 environ, et l'aile supérieure a une surface d'environ 100 à 200 m², le câble reliant les deux ailes ayant une longueur d'environ 3 km.

La plate-forme de l'invention est déployée en altitude par tout moyen approprié, par exemple à l'aide de ballons de type stratosphériques, d'un avion tracteur ou de fusées, c'est-à-dire des moyens beaucoup moins onéreux que ceux destinés au lancement des satellites classiques, du fait que cette plate-forme est déployée à des altitudes très inférieures à celles des orbites des satellites classiques, que ces satellites aient une orbite haute ou basse. En effet, la plate-forme de l'invention est déployée, par exemple, à des altitudes de l'ordre de 20 km ou moins, comme précisé ci-dessous.

La plate-forme de l'invention tire parti de la différence de caractéristiques des de couches de vents en altitude, présentant des gradients verticaux de vitesse et/ou de direction, en particulier des couches de vents à des altitudes d'environ 10 à 20 km. Dans l'exemple du dessin, il s'agit, à titre non limitatif, de la couche 7 de vents dite «jet stream » dans laquelle évolue l'aile 2 (la base de cette couche est à une altitude d'environ 20 km et elle a une épaisseur d'environ 2 km) d'une part et de la couche 8 de vents dits « vents régionaux de basse altitude » située sous la première, dans laquelle évolue l'aile 3. La zone intermédiaire 9, à propriétés instables, séparant ces deux couches 7 et 8 a une épaisseur d'environ 1 km. Les vitesses des vents dans les couches 7 et 8 sont très différentes : de l'ordre de 200 km/h dans la couche 7 et de l'ordre de 60 km/h dans la couche 8, et leurs directions sont également différentes, mais généralement relativement constantes à court terme, en particulier en ce qui concerne la couche 7. Un positionnement alternatif consisterait à placer l'aile haute 2 dans la stratosphère au-dessus du jet stream et l'aile basse 3 dans le jet stream. Une autre possibilité consiste à exploiter simplement des gradients de vents indépendamment du jet stream mais ceux-ci n'ayant pas de régularité l'automatisation du contrôle est moins simple et on peut moins compter sur la permanence dans le temps des vents autres que ceux du jet stream et de la stratosphère.

Bien entendu, l'emplacement de la plate-forme de l'invention doit être choisi de façon à être en dehors des couloirs de circulation aérienne. A une telle altitude d'une vingtaine de kilomètres, la surface terrestre « vue » par cette plate-forme (un cercle dont le diamètre est d'environ 500 à 1000 km) est inférieure à celle vue par un satellite classique, mais grâce à son prix de revient total (fabrication et lancement seulement) très inférieur à celui d'un satellite classique, il est possible d'en déployer un plus grand nombre pour observer la même surface pour un prix de revient encore bien inférieur à celui d'un satellite, ou bien simplement de desservir dans un premier temps une zone plus petite pour un coût très faible, ce qui permet en outre un déploiement progressif bien plus aisé du point de vue financier. Corollairement, étant donné le relativement faible prix de revient de la plate-forme de l'invention, celle-ci peut aussi être utilisée pour servir de relais de télécommunications ou de plate-forme d'observation pour des événements particuliers de courte durée (conférences, événements sportifs ou autres), et peut ensuite être déplacée en d'autres endroits pour d'autres événements.

La source d'énergie de maintien à une altitude pratiquement constante de la plate-forme de l'invention avec sa charge utile réside uniquement dans les caractéristiques différentes des vents de couches 7 et 8. Ces caractéristiques différentes sont les vitesses des vents et/ou leurs directions respectives

On coordonne les attitudes des parties 2 et 3 l'une par rapport à l'autre et par rapport à la direction du vent afin qu'ils équilibrent leurs tractions respectives sur le câble 4 tout en restant en sustentation. Bien entendu, ces deux parties ne sont pas forcément immobiles par rapport au sol, mais peuvent « louvoyer », c'est-à-dire qu'elles évoluent (par exemple en dessinant dans l'espace des « 8 », ou de façon générale une courbe fermée parcourue cycliquement) autour d'une position centrale fixe (par rapport au sol) sans trop s'en éloigner. Pour déplacer la plate-forme vers une autre position centrale fixe, on lui envoie un ordre approprié pour privilégier la traction horizontale de l'une ou l'autre des ailes 2 et 3 en fonction du déplacement désiré.

On a schématisé sur le dessin les composantes des différentes s'exerçant sur le centre de gravité de chacune des ailes. Du côté de l'aile 2, le vecteur horizontal 10 représente la force du vent relatif auquel elle est soumise. Le vecteur vertical 11 représente la force de gravité s'exerçant sur l'aile 2. Le vecteur ascendant (mais non nécessairement vertical) 12 représente la résultante des vecteurs de forces de sustentation et de traînée (vecteurs tracés en traits interrompus) exercées sur l'aile 2 par le vent relatif auquel elle est soumise. Le vecteur 13, pratiquement confondu avec la direction du câble 4, et dirigé vers le bas, représente la force de traction exercée par ce câble sur l'aile 2.

Du côté de l'aile 3, le vecteur horizontal 14 représente la force du vent relatif auquel elle est soumise. Le vecteur vertical 15 représente la force de gravité s'exerçant sur l'aile 3. Le vecteur (mais non nécessairement vertical) 16 représente la résultante des vecteurs de forces de sustentation et de traînée (vecteurs tracés en traits interrompus) exercées sur l'aile 3 par le vent relatif auquel elle est soumise. Il est possible que cette aile 3 soit également en sustentation si l'équilibre des forces s'exerçant en son centre de gravité le permet. Le vecteur 17, pratiquement confondu avec la direction du câble 4, et dirigé vers le haut, représente la force de traction exercée par ce câble sur l'aile 3.

Il résulte de la composition de ces différents vecteurs que pour que la plate-forme de l'invention reste en sustentation et ne s'éloigne que très peu d'un point fixe central, il faut et il suffit que les forces exercées sur le câble 4 par les deux ailes 2, 3 s'équilibrent constamment entre elles, c'est-à-dire que ces ailes soient orientées correctement par rapport à la direction des vents auxquels elles sont soumises, en fonction de la vitesse de ces vents.

De façon avantageuse, l'alimentation en énergie électrique des matériels électriques et électroniques embarqués (circuits de télécommunication et de contrôle des gouvernes, appareils électro-optiques de la charge utile,...) est assurée par exemple par des panneaux électriques solaires associés à des accumulateurs ou alternativement par une ou plusieurs petites hélices génératrices d'énergie placées sur les ailes. Du fait que ces panneaux solaires sont éclairés par le soleil pendant environ 50% du temps, et que les matériels embarqués ne nécessitent qu'une énergie beaucoup plus faible que celle requise pour maintenir en altitude des plates-formes de l'art antérieur autres que les satellites géostationnaires (plates-formes de type « HALE »), les accumulateurs en question peuvent être légers et peu onéreux.

En conclusion, la plate-forme de l'invention est simple et peu onéreuse à réaliser et à déployer en altitude, tout en pouvant être quasi géostationnaire pratiquement éternellement (sa durée limite d'utilisation dépendant de la durée de vie de ses composants), sans aucun apport d'énergie (carburant ou autre consommable) ni de moteur « conventionnel » pour la maintenir en altitude et sans nécessiter de lanceur lourd et onéreux du type de ceux requis pour les satellites classiques. Les composants des matériels embarqués n'ont pas besoin d'être certifiés « espace » du fait que la plate-forme évolue à basse altitude et peuvent être des composants classiques (dits « COTS) à bas prix de revient. En outre, si cette plate-forme comporte des télescopes d'observation terrestre, ceux-ci peuvent être beaucoup plus compacts que ceux d'un satellite classique remplissant les mêmes fonctions, du fait de l'altitude beaucoup plus basse à laquelle est maintenue la plate-forme de l'invention.

Il convient de noter que dans le dispositif de l'invention, tous les organes de mesure, contrôle et charge utile sont incorporés à l'intérieur de ailes, ce qui minimise grandement la traînée, et ces ailes rigides (ou en tout cas beaucoup moins souples que du tissu de parachute) permettent par ce fait une finesse maximum, donc la meilleure efficacité aérodynamique. En outre, du fait que ce dispositif n'a pas besoin de moyens d'alimentation électrique pour être maintenu en permanence en altitude, il n'a besoin que de peu d'énergie pour alimenter ses éléments électriques et électroniques, et lesdits panneaux solaires suffisent largement pour assurer cette alimentation.

## Revendications

1. Dispositif de maintien en altitude d'une charge utile dont la source d'énergie de maintien en altitude est permanente et extraite du milieu, comportant au moins deux corps planants (2,3) reliés entre eux par au moins une liaison matérielle (4) et se trouvant, en utilisation, à des altitudes différentes par rapport au sol et pour lesquelles les vents instantanés ont, pratiquement en permanence, des caractéristiques différentes, et comportant un système de contrôle des attitudes respectives de ces deux corps, **caractérisé en ce que** chaque corps planant est constitué d'une aile d'aéronef rigide en sustentation, la charge utile et le système de contrôle des attitudes de chaque aile étant incorporés à l'intérieur des ailes.

2. Dispositif selon la revendication 1, **caractérisé en ce que** les caractéristiques différentes des vents instantanés sont leur vitesse et/ou leur direction.

3. Dispositif selon la revendication 1 ou 2, **caractérisé en ce que** lesdites altitudes sont comprises entre 10 et 20 km environ

4. Dispositif selon la revendication 1, 2 ou 3 **caractérisé en ce qu'**en utilisation, l'un des corps (2) est situé dans une couche de vents (7) dite « jet stream » et l'autre (3) est situé dans une couche de vents (8) dits «vents régionaux de basse altitude » située sous la première.

5. Dispositif selon la revendication 1, 2 ou 3, **caractérisé en ce qu'**en utilisation, l'un des corps est situé dans une couche de vents de la stratosphère et l'autre est situé dans une couche de vents dite « jet stream » située sous la première.

6. Dispositif selon l'une des revendications précédentes, **caractérisé en ce que** la liaison matérielle est un câble relié en un point de chacun des deux corps.

7. Dispositif selon l'une des revendications 1 à 5, **caractérisé en ce que** la liaison matérielle est un câble dont au moins une extrémité se subdivise en plusieurs brins reliés chacun en un point différent de la structure du corps correspondant.

8. Dispositif selon l'une des revendications précédentes, **caractérisé en ce qu'**il comporte un dispositif d'alimentation en énergie électrique alimentant uniquement les matériels électriques et électroniques embarqués.

9. Dispositif selon l'une des revendications précédentes, **caractérisé en ce que** sa charge utile comporte des matériels de télécommunication.

10. Dispositif selon l'une des revendications précédentes, **caractérisé en ce que** sa charge utile comporte des matériels d'observation terrestre et/ou aérienne et/ou de télécommunication, ces matériels étant optiques, radio ou radar.

11. Dispositif selon l'une des revendications précédentes, **caractérisé en ce que** sa charge utile comporte des matériels d'aide à la radionavigation.

## Patentansprüche

1. Vorrichtung zur Höhenhaltung einer Nutzlast, deren Höhenhaltungsenergiequelle dauerhaft ist und aus der Umwelt bezogen wird, umfassend mindestens zwei Schwebekörper (2, 3), die über mindestens eine materielle Verbindung (4) miteinander verbunden sind und sich im Einsatz in unterschiedlichen Höhen relativ zum Boden befinden, und für die die momentanen Winde praktisch permanent unterschiedliche Merkmale aufweisen und umfassend ein System zur Steuerung der jeweiligen Lagen dieser beiden Körper, **dadurch gekennzeichnet, dass** jeder Schwebekörper aus einem während des Hubs starren Luftfahrzeugflügel besteht, wobei die Nutzlast und das Lagesteuersystem eines jeden Flügels in den Flügeln enthalten sind.

2. Vorrichtung nach Anspruch 1, **dadurch gekennzeichnet, dass** die unterschiedlichen Eigenschaften der momentanen Winde ihre Geschwindigkeit und/oder ihre Richtung sind.

3. Vorrichtung nach Anspruch 1 oder 2, **dadurch gekennzeichnet, dass** die Höhen zwischen etwa 10 und 20 km liegen.

4. Vorrichtung nach Anspruch 1, 2 oder 3, **dadurch gekennzeichnet, dass** sich im Einsatz einer der Körper (2) in einer Windschicht (7) namens "jet stream" und der andere (3) in einer unterhalb der ersten Schicht liegenden Windschicht (8) namens "regionale Tiefenwinde" befindet.

5. Vorrichtung nach Anspruch 1, 2 oder 3, **dadurch gekennzeichnet, dass** sich im Einsatz einer der Körper in einer Windschicht der Stratosphäre und der andere in einer unterhalb der ersten Schicht liegenden Windschicht namens "jet stream" befindet.

6. Vorrichtung nach einem der vorstehenden Ansprüche, **dadurch gekennzeichnet, dass** die materielle Verbindung ein an einen Punkt an jedem der beiden Körper angeschlossenes Kabel ist.

7. Vorrichtung nach einem der Ansprüche 1 - 5, **dadurch gekennzeichnet, dass** die materielle Verbindung ein Kabel ist, dessen mindestens ein Ende in mehrere Stränge unterteilt ist, die jeweils mit einem anderen Punkt an der Struktur des entsprechenden Körpers verknüpft sind.

8. Vorrichtung nach einem der vorstehenden Ansprüche, **dadurch gekennzeichnet, dass** sie eine Energieversorgungsvoruchtung aufweist, die nur die an Bord befindlichen elektrischen und elektronischen Geräte mit Energie versorgt.

9. Vorrichtung nach einem der vorstehenden Ansprüche, **dadurch gekennzeichnet, dass** deren Nutzlast Telekommunikationsgeräte enthält.

10. Vorrichtung nach einem der vorstehenden Ansprüche, **dadurch gekennzeichnet, dass** deren Nutzlast Boden- und/oder Luftüberwachungs- und/oder Telekommunikationsgeräte enthält, wobei diese Geräte optische, Funk- oder Radargeräte sind.

11. Vorrichtung nach einem der vorstehenden Ansprüche, **dadurch gekennzeichnet, dass** deren Nutzlast Funknavigationsgeräte enthält.

## Claims

1. A device for maintaining the altitude of a payload of which the altitude-maintenance energy source is permanent and extracted from the environment, comprising at least two gliding bodies (2,3) interconnected by at least one physical link (4) and being, during use, at different altitudes relative to the ground and for which the instantaneous winds have, practically permanently, different characteristics, and comprising a system that controls the respective attitudes of said two bodies, **characterised in that** each gliding body is made up of an aircraft wing that is rigid in lift, the payload and the system for controlling the attitudes of each wing being incorporated within the wings.

2. The device according to Claim 1, **characterised in that** the different characteristics of the instantaneous winds are their speed and/or their direction.

3. The device according to Claim 1 or 2, **characterised in that** said altitudes are between approximately 10 and 20 km.

4. The device according to Claim 1, 2 or 3, **characterised in that** when in use, one of the bodies (2) is located in a layer of winds (7) called the "jet stream" and the other (3) is located in a layer of winds (8) called "regional low altitude winds" located beneath the first.

5. The device according to Claim 1, 2 or 3, **characterised in that** when in use, one of the bodies is located in a layer of winds of the stratosphere and the other is located in a layer of winds called the "jet stream" located beneath the first.

6. The device according to any of the preceding claims, **characterised in that** the physical link is a cable connected at a point on each of the two bodies.

7. The device according to any of Claims 1 to 5, **characterised in that** the physical link is a cable, at least one end of which is sub-divided into several strands each connected at a different point on the structure of the corresponding body.

8. The device according to any of the preceding claims, **characterised in that** it comprises an electric power supply device powering only the onboard electric and electronic equipment.

9. The device according to any of the preceding claims, **characterised in that** its payload comprises telecommunication equipment.

10. The device according to any of the preceding claims, **characterised in that** its payload comprises terrestrial observation and/or air observation and/or telecommunication equipment, this equipment being optical, radio or radar.

11. The device according to any of the preceding claims, **characterised in that** its payload comprises radio navigation assistance equipment.
